# EUROPEAN PATENT APPLICATION

(11) **EP 3 480 765 A1**
(43) Date of publication of application: **08.05.2019**
(21) Application number: 18204891.8
(22) Date of filing: 07.11.2018
(51) Int. Cl.: G06Q 30/02

(54) **DATA PROCESSING APPARATUS AND METHOD BY THE SAME**

(30) Priority: 07.11.2017 JP 2017214792
(71) Applicant: Toshiba Tec Kabushiki Kaisha, Shinagawa-ku Tokyo 141-8562 (JP)
(72) Inventor: SAKURAI, Kenji, Shinagawa-ku,, Tokyo 141-8562 (JP)
(74) Representative: Fédit-Loriot

(57) **Abstract**

A data processing apparatus determines whether a condition for issuing a stamp is satisfied based on receipt data, and issues a stamp if the issuing condition is satisfied. If the stamp is issued, the data processing apparatus updates data of a stamp card, which is stored in association with customer specifying information, to data of the stamp card indicating a result of collecting an issued stamp. The data processing apparatus associates card identification information for identifying a stamp card of which the data is updated with the receipt data. The data processing apparatus performs control to cause to display, on an information terminal possessed by a customer, a receipt image based on the receipt data and the image of the stamp card identified by the card identification information associated with the receipt data.

## Description

### FIELD

The present invention relates to a data processing system and the technologies used therein, in general, and embodiments described herein relate more particularly to a data processing apparatus for processing data of an electronic receipt and an electronic stamp card and a method by the same.

### BACKGROUND

In recent years, some retail stores provide electronic receipt service. An electronic receipt system is introduced in such a retail store. In the retail store in which the electronic receipt system is introduced, a receipt issued for each transaction from a POS (Point Of Sales) terminal is converted to electronic data. As an example of converting a receipt to the electronic data, a receipt printed on a sheet is converted to image data (image information). As another example, various kinds of information (information recognized from a character code) recorded in the receipt is converted to character code data (code information). In recent years, the latter has been widely used. In most electronic receipt systems, the electronic receipt data after electronic data conversion is stored in a center server in association with each customer. A customer who uses the electronic receipt service can browse his/her electronic receipt data stored in the center server with an information terminal such as a smartphone or the like, and download it to the information terminal. Information for specifying a customer to which the electronic receipt data is associated may be registered, for example, by a customer who wants to use the electronic receipt service, and a member ID (Identifier) issued at that time may be used or an existing member ID of a point member may be used.

On the other hand, in many retail stores, a stamp card service for sales promotion is implemented. In the stamp card service, basically, a customer shows a stamp card to a store clerk to receive impression of a stamp at the time of checkout in a retail store, and if the number of stamps reaches a certain number, the customer can enjoy a privilege. Recently, a service using an electronic stamp card in place of a stamp card on a sheet have also been proposed. The stamp card service is realized by an electronic stamp card system. In the electronic stamp card system, an electronic stamp card to which a stamp is affixed electronically each time the checkout is performed in the retail store is managed in the center server. Such an electronic stamp card is associated with, for example, an identification code number of electronic money used for payment, a member ID of a point member, or the like. In the electronic stamp card system, the customer can browse information of the electronic stamp card stored in the center server using the information terminal such as a smartphone.

As described above, a customer (e.g., a consumer, a member) can use the electronic receipt system and electronic stamp card system with one information terminal. However, the electronic receipt system and the electronic stamp card system are not linked. Therefore, for example, when a customer who has browsed the electronic receipt intends to browse the stamp card to which a stamp is affixed in a transaction for which a receipt is issued, the customer needs to log in to the electronic stamp card system to extract the electronic stamp card from the center server, which is troublesome.

To solve such problems, there is provided a data processing apparatus, comprising: at least one computer, the at least one computer configured to:
acquire customer specifying information for specifying a customer and receipt data indicating details of purchase by the customer;
add the customer specifying information and the receipt data acquired to a first storage section in which the customer specifying information and the receipt data are stored in an associated manner;
determine whether a condition for issuing a stamp for which a privilege can be obtained according to the number of collected stamps based on the receipt data acquired is satisfied, and issue a stamp when the issuing condition is satisfied;
update data of a stamp card, which is stored in association with the customer specifying information acquired, in a second storage section in which the customer specifying information and the data of the stamp card for collecting the stamp are stored in an associated manner, to data of the stamp card indicating a result of collecting the stamp issued when the issuing module issues the stamp;
associate card identification information for identifying the stamp card, of which the data is updated, with the receipt data acquired when the stamp is issued; and
perform control to cause to display, on an information terminal possessed by the customer, a receipt image based on the receipt data stored in the first storage section and an image of the stamp card identified by the card identification information associated with the receipt data.

Specific examples of the embodiments are defined in claims 2 to 7.

The invention also relates to a method for performing the data processing, comprising:
acquiring customer specifying information for specifying a customer and receipt data indicating purchase information by the customer;
adding the acquired customer specifying information and the receipt data to a first storage section in which the customer specifying information and the receipt data are stored in an associated manner;
determining whether a condition for issuing a stamp for which a privilege can be obtained according to the number of collected stamps based on the acquired receipt data is satisfied, and issuing a stamp when the issuing condition is satisfied;
updating data of a stamp card, which is stored in association with the acquired customer specifying information in a second storage section in which the customer specifying information and the data of the stamp card for collecting the stamp are stored in an associated manner, to data of the stamp card indicating a result of collecting the issued stamp when the stamp is issued;
associating card identification information for identifying the stamp card, of which the data is updated with the acquired receipt data, when the stamp is issued; and
performing control to cause to display, on an information terminal possessed by the customer, a receipt image based on the receipt data stored in the first storage section and an image of the stamp card identified by the card identification information associated with the receipt data.

Specific examples of the embodiments are mentioned in claims 9 to 13.

The present invention further concerns a non-transitory computer readable medium storing a program, which when executed by a computer, performs the steps of the method as defined above.

The present invention also relates to a computer program product comprising program code means stored on a computer readable medium for performing the method as defined above, when the program product is run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram schematically illustrating an arrangement of a system for linking an electronic receipt system with an electronic stamp card system according to at least one embodiment;
Fig. 2 is a block diagram illustrating a circuit configuration of main portions of an information terminal used in the system according to at least one embodiment;
Fig. 3 is a schematic diagram illustrating an example of a home screen displayed on a touch panel of the information terminal;
Fig. 4 is a block diagram illustrating a circuit arrangement of main portions of a POS terminal used in the system according to at least one embodiment;
Fig. 5 is a schematic diagram illustrating a structure of electronic receipt data transmitted from the POS terminal to a center server;
Fig. 6 is a block diagram illustrating a circuit arrangement of main portions of the center server used in the system according to at least one embodiment;
Fig. 7 is a schematic diagram illustrating a data structure of a receipt record stored in a receipt database managed by the center server;
Fig. 8 is a schematic diagram illustrating a data structure of a card record stored in a stamp card database managed by the center server;
Fig. 9 is a schematic diagram illustrating a data structure of a management record stored in a management database managed by the center server.
Fig. 10 is a flowchart depicting main procedures of a storage processing executed by a processor of the center server by executing a linkage program.
Fig. 11 is a flowchart depicting main procedures of the storage processing executed by the processor of the center server by executing the linkage program;
Fig. 12 is a flowchart depicting main procedures of a browsing processing executed by the processor of the center server by executing the linkage program;
Fig. 13 is a flowchart depicting main procedures of the browsing processing executed by the processor of the center server by executing the linkage program;
Fig. 14 is a schematic diagram illustrating an example of a screen including a receipt image displayed on the touch panel of the information terminal;
Fig. 15 is a schematic diagram illustrating an example of a screen including an electronic stamp card image displayed on the touch panel of the information terminal; and
Fig. 16 is a schematic diagram illustrating an example of a screen including a stamp history image displayed on the touch panel of the information terminal.

### DETAILED DESCRIPTION

In accordance with at least one embodiment, a data processing apparatus comprises an acquiring module configured to acquire customer specifying information for specifying a customer and receipt data indicating details of purchase by the customer; an adding module configured to add the customer specifying information and the receipt data acquired by the acquiring module to a first storage section in which the customer specifying information and the receipt data are stored in an associated manner; an issuing module configured to determine whether a condition for issuing a stamp for which a privilege can be obtained according to the number of collected stamps based on the receipt data acquired by the acquiring module is satisfied, and issue a stamp when the issuing condition is satisfied; an update module configured to update data of a stamp card, which is stored in association with the customer specifying information acquired by the acquiring module in a second storage section in which the customer specifying information and the data of the stamp card for collecting the stamp are stored in an associated manner, to data of the stamp card indicating a result of collecting the stamp issued by the issuing module when the issuing module issues the stamp; an associating module configured to associate card identification information for identifying a stamp card of which the data is updated by the update module with the receipt data acquired by the acquiring module when the issuing module issues the stamp; and a control module configured to perform control to display, on an information terminal possessed by the customer, a receipt image based on the receipt data stored in the first storage section and an image of the stamp card identified by the card identification information associated with the receipt data by the associating module. The modules may be implemented by at least one computer.

Hereinafter, at least one embodiment of a data processing apparatus capable of efficiently linking an electronic receipt system with an electronic stamp card system is described with reference to the accompanying drawings. In at least one embodiment, in the electronic receipt system, information of a receipt issued from a POS terminal in a retail store is converted to electronic data, the data is then stored in a center server, and a customer can use an information terminal such as a smartphone or the like to browse electronic receipt data stored in the center server. In the electronic stamp card system, an electronic stamp card to which a stamp is affixed electronically each time a checkout is performed in the retail store is stored in the center server, and a customer can use the information terminal such as a smartphone or the like to browse information of the electronic stamp card stored in the center server. An electronic stamp card to which a predetermined number of stamps are affixed can be exchanged for a privilege such as a gift certificate or the like.

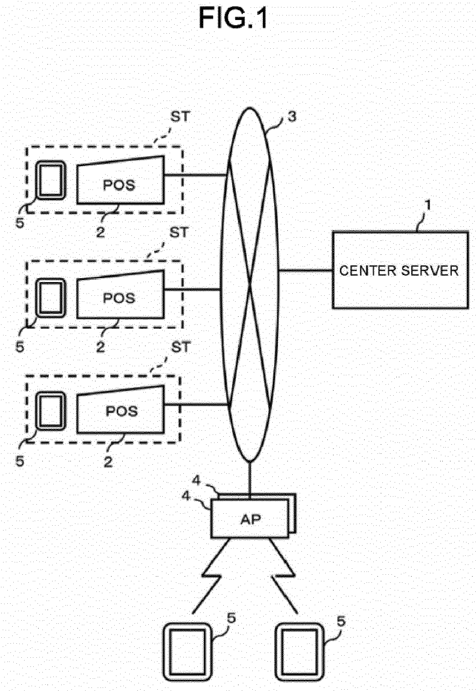

Fig. 1 is a schematic diagram schematically illustrating a configuration of a system for linking the electronic receipt system and the electronic stamp card system. Such a system includes a center server 1, POS terminals 2 respectively installed in retail stores ST, and a network 3 such as the Internet. The center server 1 functions as a data processing apparatus for linking the electronic receipt system with the electronic stamp card system. The POS terminal 2 has a function of generating electronic receipt data and transmitting it to the center server 1. The network 3 connects the center server 1 to each POS terminal 2. The center server 1 and each POS terminal 2 perform data communication via the network 3.

This system requires an information terminal 5 such as a smartphone or the like owned by a customer (e.g., a consumer, a member). The information terminal 5 can perform wireless communication using a wireless LAN (Local Area Network) or mobile communication technology. A plurality of access points 4 capable of establishing wireless communication with the information terminal 5 is connected to the network 3. The access points 4 are scattered at various places in such a manner that wireless communication areas thereof do not overlap roughly. The information terminal 5 existing within the wireless communication area of any one of the access points 4 can establish wireless communication with the access point 4. Through the wireless communication, the information terminal 5 makes a request to the center server 1 and displays an image provided from the center server 1 on a display device thereof.

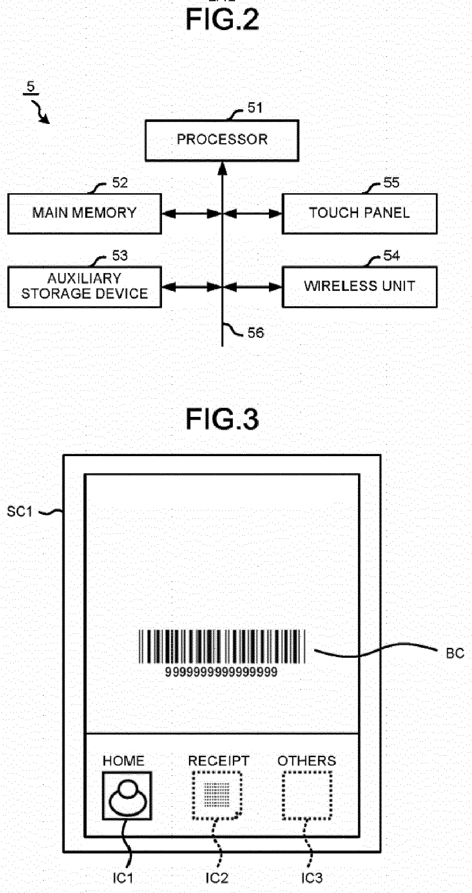

Fig. 2 is a block diagram illustrating a circuit configuration of main portions of the information terminal 5. The information terminal 5 includes a processor 51, a main memory 52, an auxiliary storage device 53, a wireless unit 54, a touch panel 55 and a system bus 56. In the information terminal 5, the processor 51, the main memory 52, the auxiliary storage device 53 and the wireless unit 54 are connected to the system bus 56 directly or via a signal input/output circuit. Thus, in the information terminal 5, the processor 51, the main memory 52, the auxiliary storage device 53, and the system bus 56 connecting them constitute a computer.

The processor 51 acts as a central part of the computer. The processor 51 controls each section to realize various functions of the information terminal 5 by executing an operating system and an application program.

The main memory 52 acts as a main storage portion of the computer. The main memory 52 includes a nonvolatile memory area and a volatile memory area. The main memory 52 stores an operating system and an application program in a nonvolatile memory area. The main memory 52 may store data necessary for the processor 51 to control each section in a nonvolatile or volatile memory area. The main memory 52 uses a volatile memory area as a work area in which data is appropriately rewritten by the processor 51.

The auxiliary storage device 53 acts as an auxiliary storage portion of the computer. For example, the auxiliary storage device 53 may be an EEPROM (Electric Erasable Programmable Read-Only Memory), an HDD (Hard DiSCDrive), an SSD (Solid State Drive), or the like. The auxiliary storage device 53 stores data used by the processor 51 to perform various processing and data generated in a processing executed by the processor 51. The auxiliary storage device 53 may store the above-described application program in some cases.

The wireless unit 54 transmits or receives data wirelessly to or from the access point 4 in conformity to a predetermined wireless communication protocol.

The touch panel 55 includes both an input device and a display device of the information terminal 5.

An application program dedicated to a member (hereinafter, referred to as a member program) for using the electronic receipt system and the electronic stamp card system in a linked manner is downloaded to the information terminal 5 having such a configuration. The member program is stored in the auxiliary storage device 53, for example. By downloading the member program to the information terminal 5, a customer who is a user of the information terminal 5 can register as a member. By performing the member registration, a unique member ID common to the electronic receipt system and the electronic stamp card system is issued as the customer specifying information for specifying a customer. The data of the member ID is also stored in the auxiliary storage device 53, for example.

When the member program is started, for example, a home screen SC1 having a layout shown in Fig. 3 is displayed on the touch panel 55. As shown in Fig. 3, a barcode BC is displayed on the home screen SC1. The barcode BC is a barcode indicating the member ID. A home icon IC1, a receipt icon IC2 and others icon IC3 are displayed on the home screen SC1. Then, the home icon IC1 is being selected, and the receipt icon IC2 and the others icon IC3 are not selected.

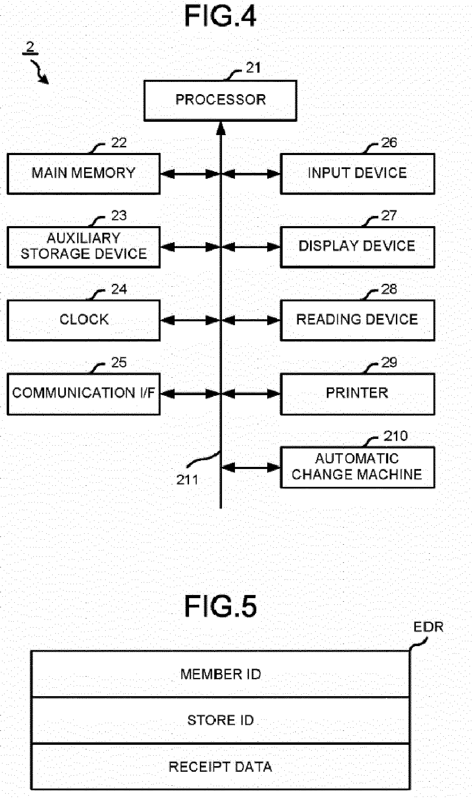

Fig. 4 is a block diagram illustrating a circuit configuration of main portions of the POS terminal 2. The POS terminal 2 includes a processor 21, a main memory 22, an auxiliary storage device 23, a clock 24, a communication interface 25, an input device 26, a display device 27, a reading device 28, a printer 29, an automatic change machine 210 and a system bus 211. In the POS terminal 2, the processor 21, the main memory 22, the auxiliary storage device 23, the clock 24, the communication interface 25, the input device 26, the display device 27, the reading device 28, the printer 29 and the automatic change machine 210 are connected to the system bus 211 directly or via a signal input/output circuit. Thus, in the POS terminal 2, the processor 21, the main memory 22, the auxiliary storage device 23, and the system bus 211 connecting them constitute a computer.

The processor 21 acts as a central part of the computer. The processor 21 controls each section to realize various functions of the POS terminal 2 by executing an operating system and an application program.

The main memory 22 acts as a main storage portion of the computer. The main memory 22 includes a nonvolatile memory area and a volatile memory area. The main memory 22 stores an operating system and an application program in a nonvolatile memory area. The main memory 22 may store data necessary for the processor 21 to execute processing to control each section in a nonvolatile or volatile memory area in some cases. The main memory 22 uses a volatile memory area as a work area in which data is appropriately rewritten by the processor 21.

The auxiliary storage device 23 acts as an auxiliary storage portion of the computer. For example, the auxiliary storage device 23 may be an EEPROM, an HDD, an SSD, or the like. The auxiliary storage device 23 stores data used by the processor 21 to perform various processing and data generated in a processing executed by the processor 21. The auxiliary storage device 23 may also store the above-described application program in some cases.

The clock 24 functions as a time information source of the POS terminal 2. The processor 21 counts the current date and time based on time information counted by the clock 24.

The communication interface 25 is connected to the network 3 to establish data communication with the center server 1 via the network 3 in conformity to a predetermined communication protocol.

The input device 26 receives input of various instructions from an operator. As the input device 26, well-known devices such as a touch sensor or a keyboard may be used alone or in combination.

The display device 27 displays various screens for providing the operator with various kinds of information. The display device 27 may be, for example, a well-known device such as a liquid crystal display device.

The reading device 28 reads a barcode, a two-dimensional data code, and the like attached to a commodity. The reading device 28 reads the barcode BC of the member ID displayed on the touch panel 55 of the information terminal 5. As the reading device 28, well-known devices such as a barcode scanner or a two-dimensional scanner may be used alone or in combination.

The printer 29 prints a receipt image on a receipt paper to issue a receipt.

The automatic change machine 210 has an insertion slot through which bills or coins are inserted, and calculates an amount of inserted bills or coins. The automatic change machine dispenses bills or coins equivalent to change amount obtained by subtracting a transaction amount from a deposit amount through a dispensing port as a change.

The POS terminal 2 having such a configuration is installed in a checkout corner of the retail store ST, for example. The number of POS terminals 2 installed in one retail store ST is not limited to one. Typically, a plurality of POS terminals 2 is installed in one retail store ST. However, in at least one embodiment, for convenience of description, one POS terminal 2 is installed in one retail store.

If data relating to a commodity purchased by a customer is input via the input device 26 or the reading device 28, the processor 21 of the POS terminal 2 performs sales processing on sales data of the commodity. If an operation for instructing the data input termination of the purchased commodity is input via the input device 26, the processor 21 controls the display device 27 to display the transaction amount calculated based on a price of the purchased commodity. Thereafter, if the cash of which an amount exceeds the transaction amount is input to the automatic change machine 210, the processor 21 generates receipt data. The receipt data indicates details of purchase, and includes a commodity name, a unit amount, a quantity, an amount, a transaction amount, a deposit amount, a change amount, and the like of the purchased commodity. The receipt data includes a transaction date and time and a receipt ID. The transaction date and time is, for example, a date and time counted by the clock 24 at the time point when the transaction is generated. The transaction date and time may be, for example, date and time counted by the clock 24 at the time data of a first commodity purchased by the customer is input. The receipt ID is a unique code issued every time the receipt data is generated. The receipt ID is counted up every time the receipt data is generated after the transaction date and time, and is obtained by adding a value of a reset counter if the date is updated.

If the generation of the receipt data is completed, the processor 21 determines whether to perform an electronic receipt processing. Specifically, when the barcode BC of the home screen SC1 displayed on the touch panel 55 of the information terminal 5 possessed by the customer is read by the reading device 28, the processor 21 determines that the electronic receipt processing is to be performed. If no barcode BC is read, the processor 21 determines that the electronic receipt processing is not performed. If it is determined that the electronic receipt processing is not performed, the processor 21 controls the printer 29 to issue a receipt on which the receipt data is printed. If it is determined that the electronic receipt processing is to be performed, the processor 21 generates electronic receipt data ERD in which the member ID and the store ID are associated with the receipt data as shown in Fig. 5. The member ID is a code obtained by decoding the barcode BC. The store ID is a preset ID unique to each retail store, and is stored in the auxiliary storage device 23, for example. The processor 21 transmits the electronic receipt data ERD to the center server 1 via the communication interface 25.

The POS terminal 2 performing such an operation may be a device corresponding to an existing electronic receipt system without any change.

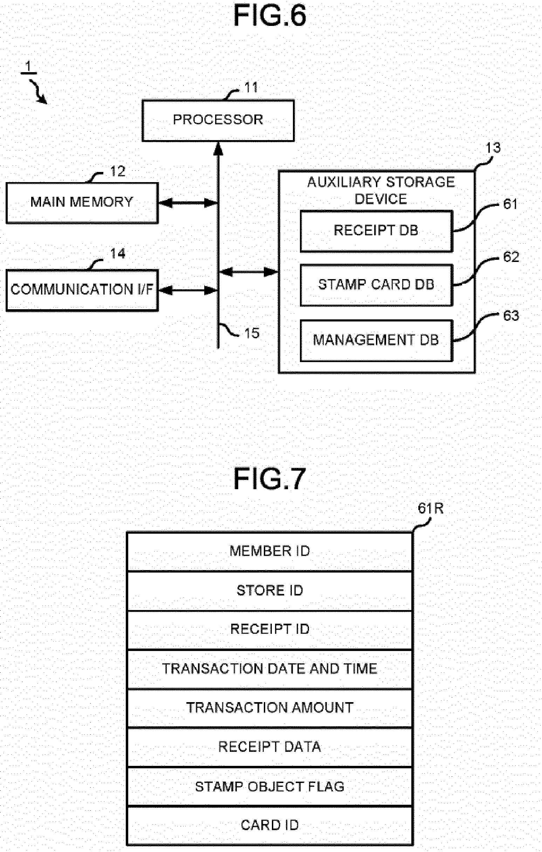

Fig. 6 is a block diagram illustrating a circuit configuration of main portions of the center server 1. The center server 1 includes a processor 11, a main memory 12, an auxiliary storage device 13, a communication interface 14 and a system bus 15. Then, in the center server 1, the processor 11, the main memory 12, the auxiliary storage device 13 and the communication interface 14 are connected to the system bus 15 directly or via a signal input/output circuit. Thus, in the center server 1, the processor 11, the main memory 12, the auxiliary storage device 13, and the system bus 15 connecting them constitute a computer.

The processor 11 acts as a central part of the computer. The processor 11 controls each section to realize various functions of the center server 1 by executing an operating system and an application program.

The main memory 12 acts as a main storage portion of the computer. The main memory 12 includes a nonvolatile memory area and a volatile memory area. The main memory 12 stores an operating system and an application program in a nonvolatile memory area. The main memory 12 may store data necessary for the processor 11 to execute processing to control each section in a nonvolatile or volatile memory area in some cases. The main memory 12 uses a volatile memory area as a work area in which data is appropriately rewritten by the processor 11.

The auxiliary storage device 13 acts as an auxiliary storage portion of the computer. For example, the auxiliary storage device 13 may be an EEPROM, an HDD, an SSD, or the like. The auxiliary storage device 13 stores data used by the processor 11 to perform various processing and data generated in a processing executed by the processor 11. The auxiliary storage device 13 may also store the above-described application program in some cases.

One application program stored in the main memory 12 or the auxiliary storage device 13 is a linkage program for linking the electronic receipt system with the electronic stamp card system.

The communication interface 14 is connected to the network 3 to establish data communication with each POS terminal 2 via the network 3 in conformity to a predetermined communication protocol. The communication interface 14 establishes data communication with the information terminal 5 through the network 3 and the access point 4.

In the center server 1 having such a configuration, the auxiliary storage device 13 includes a receipt database 61, a stamp card database 62 and a management database 63.

The receipt database 61 stores a record (hereinafter referred to as receipt record) 61R including the electronic receipt data ERD received from each POS terminal 2 via the network 3 for a certain period of time. As shown in Fig. 7, the receipt record 61R includes a member ID, a store ID, a receipt ID, a transaction date and time, a receipt data, a stamp object flag and a card ID. The receipt record 61R may include other items in addition to the above.

The member ID, the store ID and the receipt data are included in the electronic receipt data ERD. The receipt ID and the transaction date and time are extracted from the receipt data. The stamp object flag is 1-bit information for identifying whether or not the receipt data specified by the corresponding receipt ID satisfies a condition for issuing a stamp for which privilege can be obtained according to the collected number. The stamp issuing condition is described later. The stamp object flag is "1" when the stamp issuing condition is satisfied, and is "0" when the issuing condition is not satisfied. The card ID is used for specifying the electronic stamp card for collecting the stamp when the receipt data satisfies the stamp issuing condition. Here, the receipt database 61 functions as a first storage section that stores the customer specifying information (member ID) and the receipt data in an associated manner.

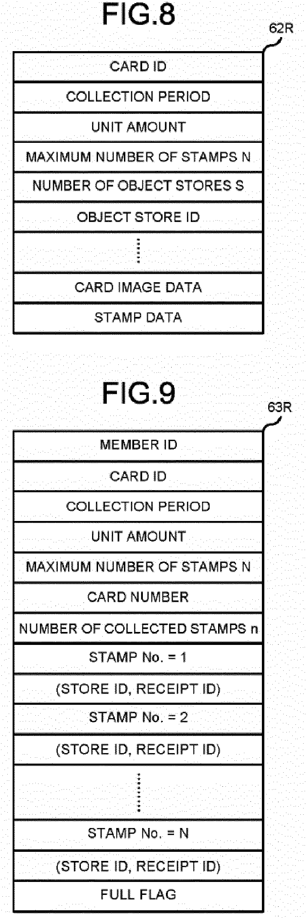

The stamp card database 62 stores a record (hereinafter, referred to as a card record) 62R generated for each type of an electronic stamp card. The electronic stamp card is a digitized stamp card, and can collect a certain amount of stamp data digitized in the same way. As shown in Fig. 8, the card record 62R includes a card ID, a collection period, a unit amount, a maximum number of stamps N, a number of object stores S, an object store ID, card image data, and stamp data. The card record 62R may include other items in addition to the above.

The card ID is a unique code issued for each type of the electronic stamp card in order to identify the type. The collection period is a period during which a stamp can be collected for the electronic stamp card (hereinafter, referred to as a card) of which the type is specified by the card ID. The stamp is given for a transaction whose transaction date and time is within a valid period. The unit amount is an amount necessary for giving one stamp. An integer of a quotient obtained by dividing the transaction amount by the unit amount is the giving number of the stamps. Therefore, the stamp issuing condition of the electronic stamp card specified by the card ID is satisfied only when the transaction amount in a transaction within the collection period is equal to or larger than the unit amount, otherwise, the stamp issuing condition is not satisfied.

The maximum number of stamps N is a maximum number of stamps that can be collected with the card. The number of object stores S is a total number of retail stores ST in which the card can be used. The object store ID is a store ID of the retail store ST in which the card can be used. In the card record 62R, the store IDs, the number of which is equal to the number of the object stores S, are stored as the object store IDs. It is prohibited that the same store ID becomes the target store ID in the different card record 62R. In other words, there is only one type of the electronic stamp card for one object retail store. One retail store does not issue plural types of electronic stamp cards. The card image data is image data of the card, and the stamp data is image data of the stamp affixed to the card.

The management database 63 stores a record (hereinafter, referred to as a management record) 63R for managing the electronic stamp card issued to the customer and the stamp collected in the electronic stamp card. As shown in Fig. 9, the management record 63R includes a card number, the number of collected stamps n, a plurality of number areas in which stamp numbers from 1 to the maximum number of stamps N are respectively set, an ID record area associated with each stamp number, and a full flag in addition to the member ID, the card ID, the collection period, the unit amount and the maximum number of stamps N as described above.

The card number is the number of electronic stamp cards for which the corresponding member ID and card ID are common. If the number of stamps collected in the electronic stamp card specified by the card ID reaches the maximum number of stamps N, a new electronic stamp card is issued to the customer. At that time, the card number is "1" for the first electronic stamp card and "2" for the second electronic stamp card. The number of collected stamps n is the number of stamps collected in the electronic stamp card specified by the corresponding card ID.

The number areas in which a series of stamp numbers are set are used for recording the collected stamps. Each ID record area associated with each number area is used for record the store ID and the receipt ID included in the receipt data for which the stamp recorded in the corresponding number area is issued.

The full flag is 1-bit information for identifying whether or not the number of stamps collected in the electronic stamp card specified by the card ID reaches the maximum number of stamps N. For example, the full flag is "0" when the number of stamps does not reach the maximum number of stamps N, and is "1" when the number of stamps reaches the maximum number of stamps N.

Here, the management database 63 functions as a second storage section that stores the customer specifying information (member ID) and the data of the stamp card in an associated manner.

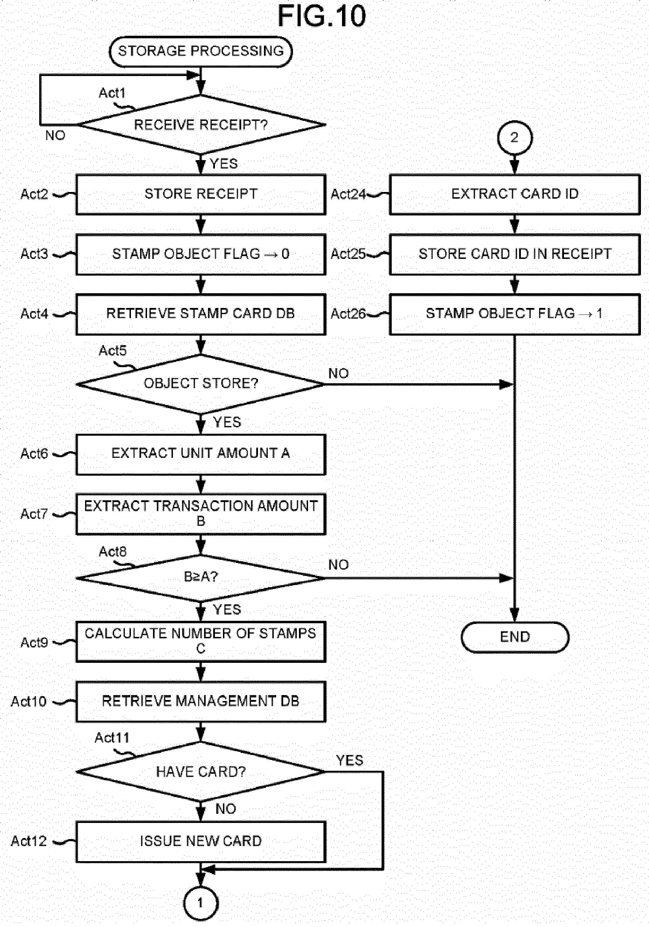

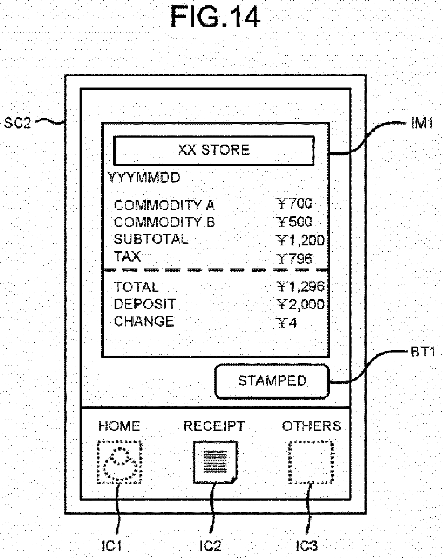

Fig. 10 to Fig. 13 are flowcharts depicting main procedures of information processing executed by the processor 11 of the center server 1 by executing the linkage program. Fig. 14 to Fig. 16 are diagrams illustrating examples of various screens displayed on the touch panel 55 of the information terminal 5 by the above information processing. The operation of the center server 1 is described below with reference to these drawings. The operation described below is merely an example, and the procedure is not particularly limited as long as the same results can be achieved.

The information processing executed by the processor 11 by executing the linkage program includes a storage processing and a browsing processing. The storage processing is mainly a processing of storing the receipt data received from the POS terminal 2 via the network 3 in the receipt database 61. The browsing processing is a processing of mainly downloading the corresponding receipt data to the information terminal 5 so that the required electronic receipt can be browsed with the information terminal 5 according to a request from the information terminal 5. The information processing executed according to the linkage program may include other processing.

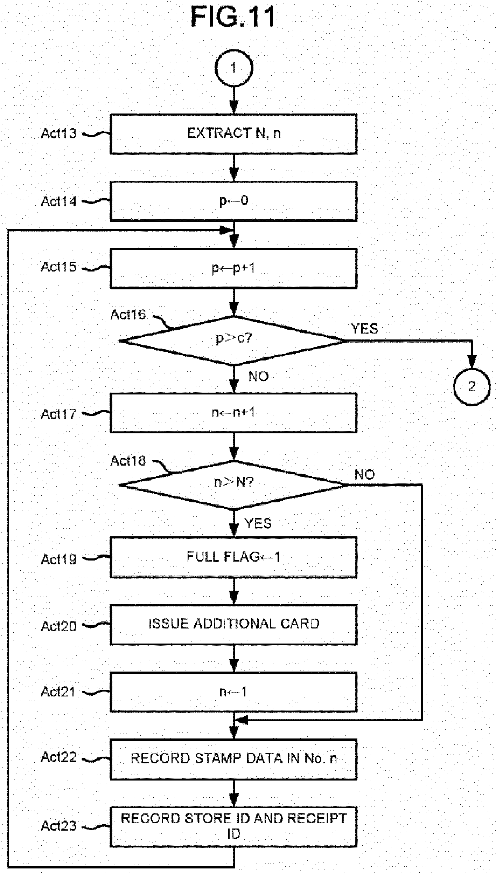

First, the storage processing is described with reference to Fig. 10 and Fig. 11.

As shown in Fig. 10, in Act 1, the processor 11 stands by until the electronic receipt data ERD is received. As described above, if the barcode BC of the home screen SC1 displayed on the touch panel 55 of the information terminal 5 possessed by the customer is read by the reading device 28 of the POS terminal 2, the electronic receipt data ERD is generated by the POS terminal 2 and is transmitted to the center server 1 as described above. The electronic receipt data ERD includes the customer specifying information (member ID) for specifying the customer and the receipt data indicating details of purchase by the customer.

If the electronic receipt data ERD transmitted from any one of the POS terminals 2 is received via the communication interface 14 (Yes in Act 1), the processor 11 generates a new receipt record 61Rx from the electronic receipt data ERD and stores it in the receipt database 61 in Act 2. Specifically, the processor 11 acquires the member ID, the store ID and the receipt data from the electronic receipt data ERD. The processor 11 analyzes the receipt data to extract the receipt ID, the transaction date and time and the transaction amount included in the data. Then, the processor 11 generates a receipt record 61Rx using the member ID, the store ID, the receipt ID, the transaction date and time, the transaction amount, and the receipt data and stores it in the receipt database 61. At this time, the processor 11 sets the stamp object flag in the receipt record 61Rx to "0", and does not set the card ID in Act 3.

Here, the computer with the processor 11 as the central part functions as an acquiring module and an adding module by executing the processing in Act 1 and Act 2 by executing the linkage program.

The processor 11 retrieves the stamp card database 62 in Act 4. Then, the processor 11 determines whether or not there is a card record 62Rx in which the object store ID is the store ID in the receipt record 61Rx and the transaction date and time is within the collection period in Act 5. If the corresponding card record 62Rx cannot be extracted from the stamp card database 62 (No in Act 5), the processor 11 terminates the storage processing.

If the card record 62Rx can be extracted from the stamp card database 62 (Yes in Act 5), the processor 11 extracts the unit amount from the card record 62Rx and stores it in the work area A in Act 6. The processor 11 extracts the transaction amount from the receipt record 61Rx and stores it in a work area B in Act 7. Then, the processor 11 determines whether or not the transaction amount stored in the work area B is equal to or larger than the unit amount stored in the work area A in Act 8. If the transaction amount is less than the unit amount (No in Act 8), the processor 11 terminates the storage processing.

If the transaction amount is equal to or larger than the unit amount (Yes in Act 8), the processor 11 calculates the number of stamps from the transaction amount and the unit amount and stores it in a work area C in Act 9. For example, the processor 11 divides the transaction amount by the unit amount, and uses an integer of the quotient as the number of stamps. The method of calculating the number of stamps is not limited thereto. For example, when a specific commodity is included in the purchased commodity included in the receipt data, the number of stamps may be doubled.

Here, the computer with the processor 11 as the central part functions as an issuing module by executing the processing in Act 4 to Act 9 by executing the linkage program.

If the number of stamps is already calculated, the processor 11 retrieves the management database 63 in Act 10. Then, the processor 11 determines where or not there is a management record 63Rx1, which includes the member ID included in the receipt record 61Rx and the card ID included in the card record 62Rx and in which the full flag is reset to "0" in Act 11.

If the corresponding management record 63Rx1 cannot be extracted (No in Act 11), the processor 11 executes an issuing processing of a new stamp card in Act 12. Specifically, the processor 11 creates a new card record 62Rx2 using the member ID included in the receipt record 61Rx, the card ID included in the card record 62Rx, the collection period, the unit amount, and the maximum number of stamps. At this time, in the card record 62Rx2, the card number is "1", the number of collected stamps n is "0", and the full flag is "0". The ID record area associated with each stamp number is blank. On the other hand, if the corresponding management record 63Rx1 can be extracted (Yes in Act 11), the processor 11 does not execute the processing in Act 12.

If the new management record 63Rx2 is created in Act 12 or if the corresponding management record 63Rx1 can be extracted in Act 11, the processor 11 extracts the maximum number of stamps N and the number of collected stamps n from the management record 63Rx1 or the management record 63Rx2 (hereinafter, collectively referred to as a management record 63Rx) in Act 13. The processor 11 resets a counter p stored in the work area to "0" in Act 14.

The processor 11 counts up a value counted by the counter p by "1" in Act 15, and determines whether or not the value counted by the counter p exceeds the number of stamps in the work area C in Act 16. If the value counted by the counter p does not exceed the number of stamps (No in Act 16), a stamp is given to the electronic stamp card. Specifically, the processor 11 counts up the number of collected stamps n by "1" in Act 17. Then, the processor 11 determines whether or not the number of collected stamps n exceeds the maximum number of stamps N in Act 18. If the number of collected stamps n does not exceed the maximum number of stamps N (No in Act 18), the processor 11 proceeds to the processing in Act 22 without performing the processing in Act 19 to Act 21 described later.

In Act 22, the processor 11 records the stamp data in the card record 62Rx in an area in which the stamp number n (number n is the same as the number of collected stamps n) in the management record 63Rx is set. The processor 11 records the store ID and the receipt ID in the receipt record 61Rx in the ID record area associated with the stamp number n in the management record 63Rx in Act 23.

Thereafter, the processor 11 returns to the processing in Act 15. Specifically, the processor 11 counts up the value counted by the counter p by "1". If the value counted by the counter p is equal to or less than the number of stamps (No in Act 16), the processor 11 executes the processing in Act 17 to Act 23.

Here, if the number of collected stamps n exceeds the maximum number of stamps N before the value counted by the counter p reaches the number of stamps (Yes in Act 18), since the number of stamps given to the electronic stamp card managed with the management record 63Rx reaches the maximum number of stamps N, no more stamps can be given. The processor 11 updates the full flag in the management record 63Rx to "1" in Act 19. The processor 11 performs a processing for issuing an additional stamp card. Specifically, the processor 11 creates a new management record 63Ry by copying the member ID, the card ID, the collection period, the unit amount and the maximum number of stamps included in the management record 63Rx. At this time, the card number in the management record 63Ry is obtained by adding "1" to the card number in the management record 63Rx. The number of collected stamps n is "0", and the full flag is "0". The ID record area associated with each stamp number is blank.

The processor 11 sets the number of collected stamps n in the management record 63Ry to "1" in Act 21. Then, the processor 11 executes the processing in Act 22 and Act 23 in the way as described above. Specifically, the processor 11 records the stamp data in the card record 62Rx in the area in which the stamp number n (the number n is the same as the number of collected stamps n) is set in the management record 63Ry. The processor 11 records the store ID and the receipt ID in the receipt record 61Rx in the ID record area associated with the stamp number n in the management record 63Ry. Thereafter, the processor 11 returns to the processing in Act 15.

The computer with the processor 11 as the central part functions as an update module by executing the processing in Act 15 to Act 23 by executing the linkage program.

In Act 16, if the value counted by counter p exceeds the number of stamps (Yes in Act 16), the management record 63Rx or the management record 63Ry is updated so that the stamps, of which the number is calculated in Act 9, are given to the stamp card. Therefore, the processor 11 extracts the card ID from the management record 63Rx or the management record 63Ry in Act 24 in Fig. 10. Then, the processor 11 stores the card ID in the receipt record 61Rx in Act 25. The processor 11 sets the stamp object flag in the receipt record 61Rx as "1" in Act 26. Thus, the processor 11 terminates the storage processing.

The computer with the processor 11 as the central part functions as an associating module by executing the processing in Act 24 and Act 25 by executing the linkage program.

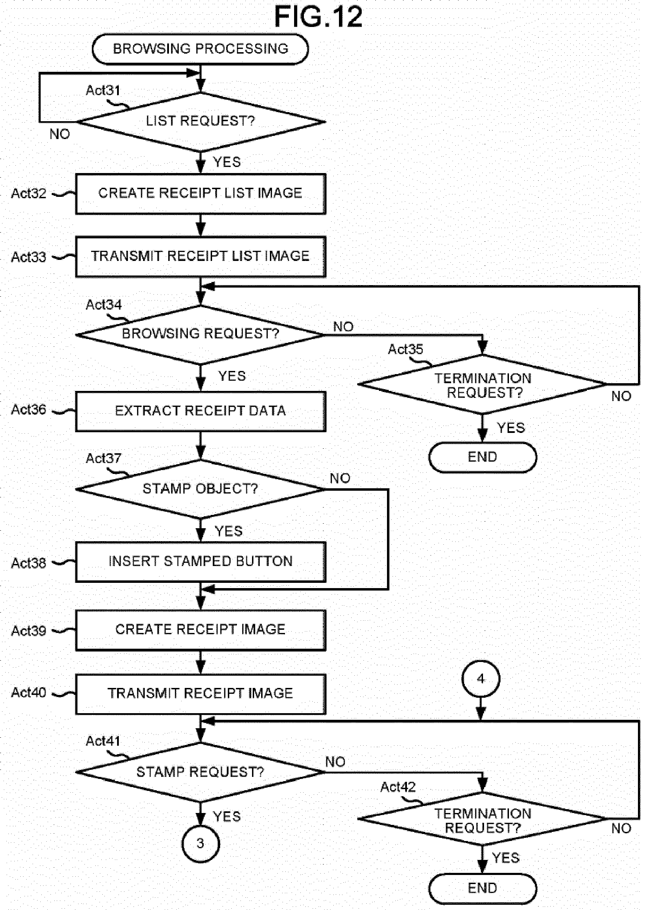

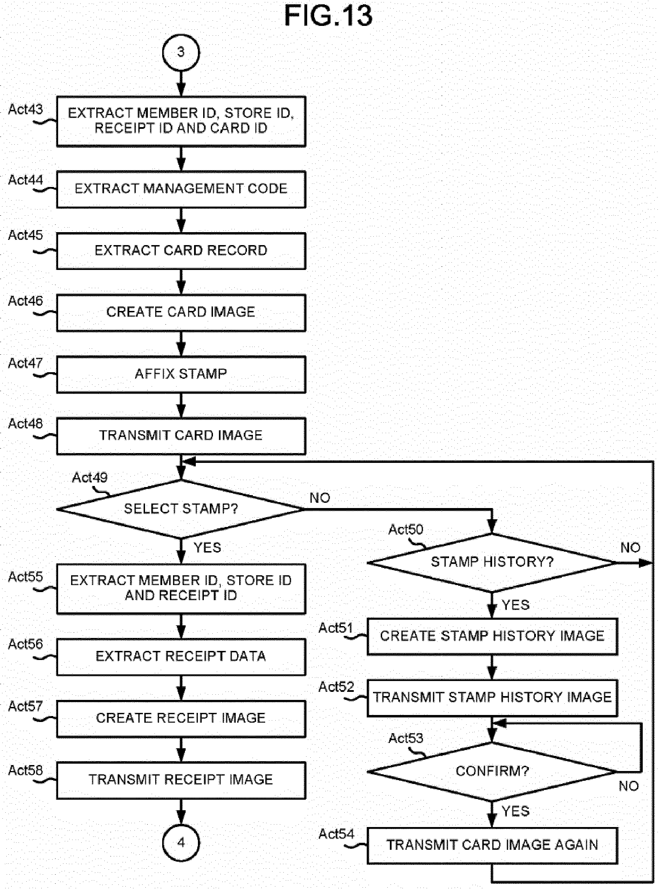

Next, the browsing processing is described with reference to Fig. 12 and Fig. 13.

As shown in Fig. 12, the processor 11 waits for a receipt list request command in Act 31. The list request command is outputted from the information terminal 5. Specifically, the customer, the user of the information terminal 5, starts the member program. If the member program is started, since the home screen SC1 is displayed on the touch panel 55, the customer touches the receipt icon IC2. If the receipt icon IC2 is touched, a list request command is transmitted from the information terminal 5 to the center server 1. The list request command includes the member ID stored in the information terminal 5.

If the list request command is received, the processor 11 of the center server 1 generates a receipt list image in Act 32. Specifically, the processor 11 retrieves the receipt database 61 to extract all the receipt records 61Ra including the member ID included in the list request command. Then, the processor 11 creates a receipt list image in which the store ID in each receipt record 61Ra or a retail store name specified by the store ID, the receipt ID, and the transaction date and time are listed. The processor 11 controls the communication interface 14 to transmit the data of the receipt list image to the information terminal 5 which transmits the list request command in Act 33. Under the control, in the information terminal 5 that transmitted the list request command, the receipt list image is displayed on the touch panel 55.

The customer who confirms the receipt list image touches a display of a line of the receipt in which transaction details is required to be confirmed from the receipt list to select the receipt. If the display of the line of the receipt is touched, a browsing request command of the receipt is transmitted from the information terminal 5 to the center server 1. The browsing request command includes the store ID and receipt ID of the selected receipt and the member ID stored in the information terminal 5. If the customer who confirms the receipt list image performs a termination operation, a termination request command is transmitted from the information terminal 5 to the center server 1.

The processor 11 of the center server 1 which controls the transmission of the receipt list image in Act 33 determines whether or not the browsing request command is received in Act 34. If the browsing request command is not received (No in Act 34), the processor 11 determines whether or not the termination request command is received in Act 35. If the termination request command is not received (No in Act 35), the processor 11 returns to the processing in Act 34. Here, the processor 11 stands by until the browsing request command is received in Act 34 or the termination request command is received in Act 35.

In the standby state in Act 34 and Act 35, if the browsing request command is received (Yes in Act 34), the processor 11 extracts the receipt data requested for browsing from the receipt database 61 in Act 36. Specifically, the processor 11 acquires the receipt record 61Rb having the member ID, the store ID and the receipt ID that are coincident with those included in the browsing request command, and extracts the receipt data from the receipt record 61Rb.

Next, the processor 11 confirms the stamp object flag in the receipt record 61Rb in Act 37. Here, if the stamp object flag is "1", i.e., if the receipt data satisfies the stamp issuing condition (Yes in Act 37), the processor 11 inserts the image data corresponding to a stamped button in the receipt data in Act 38. On the other hand, if the stamp object flag is "0", i.e., the receipt data does not satisfy the stamp issuing condition (No in Act 37), the processor 11 does not execute the processing in Act 38.

If it is determined that the processing in Act 38 is terminated or if it is determined that the stamp issuing condition is not satisfied in Act 37, the processor 11 creates a receipt image in Act 39. Specifically, the processor 11 creates an image of a receipt similar to a paper receipt based on the receipt data extracted in Act 36. The processor 11 controls the communication interface 14 to transmit the data of the receipt image to the information terminal 5 that transmitted the browsing request command in Act 40. Under the control, in the information terminal 5 that transmitted the browsing request command, a receipt image is displayed on the touch panel 55.

Fig. 14 shows an example of a screen SC2 including a receipt image IM1 on the touch panel 55. On the screen SC2, a receipt image IM1 corresponding to the receipt data satisfying the stamp issuing condition is displayed. In this example, since the stamp issuing condition is satisfied, an image of the stamped button BT1 as well as the receipt image IM1 is also displayed on the screen SC2.

The customer who confirms the receipt image IM1 can confirm the electronic stamp card collecting the stamp issued according to the receipt data. If the customer confirms the electronic stamp card, the customer touches the stamped button BT1. If the customer does not confirm the electronic stamp card, the customer touches a termination button (not shown). If the stamped button BT1 is touched, a stamp request command is transmitted from the information terminal 5 to the center server 1. If the termination button is touched, a termination request command is transmitted from the information terminal 5 to the center server 1.

The processor 11 of the center server 1 that controls the transmission of the receipt image in Act 40 determines whether or not the stamp request command is received in Act 41. If the stamp request command is not received (No in Act 41), the processor 11 determines whether or not the termination request command is received in Act 42. If the termination request command is not received (No in Act 42), the processor 11 returns to the processing in Act 41. Here, in Act 41 and Act 42, the processor 11 stands by until the stamp request command or the termination request command is received.

In the standby state in Act 41 and Act 42, if the stamp request command is received (Yes in Act 41), in Act 43 in Fig. 13, the processor 11 extracts the member ID, the store ID, the receipt ID and the card ID from a receipt record 61Rb including the receipt data used for creating the receipt image in Act 39. Then, in Act 44, the processor 11 retrieves the management database 63 to extract a management record 63Rb in which the member ID and the card ID are coincident with those extracted in Act 43, and the store ID and the receipt ID extracted in Act 43 are stored in any one of ID record areas. In Act 45, the processor 11 retrieves the stamp card database 62 to extract the card record 62Rb including the card ID of the management record 63Rb.

The processor 11 generates an electronic stamp card image using the card image data in the card record 62Rb in Act 46. Then, the processor 11 adds the stamp data collected by the card to the electronic stamp card image in Act 47. Specifically, in the electronic stamp card image, N stamp frames corresponding to the maximum number of stamps are formed, and a series of frame numbers are allocated to the stamp frames. First, if the stamp data is recorded in an area in which the stamp number is "1" in the management record 63Rb, the processor 11 displays a stamp image based on the stamp data using a first color in the stamp frame whose frame number is "1". Next, if the stamp data is recorded in an area in which the stamp number is "2" in the management record 63Rb, the processor 11 displays a stamp image based on the stamp data in the stamp frame whose frame number is "2". At this time, the processor 11 determines whether or not the store ID and the receipt ID recorded in the ID record area corresponding to the area with the stamp number "1" are coincident with the store ID and the receipt ID recorded in the ID record area corresponding to the area with the stamp number "2". If they are coincident, the processor 11 displays the stamp image in the stamp frame whose frame number is "2" in the first color. If they are not coincident, the processor 11 displays the stamp image in the stamp frame whose frame number is "2" in a second color. The second color is different from the first color. Thereafter, the processor 11 executes the same processing on the stamp data recorded in areas of the management record 63Rb with the stamp numbers "3", "4", "5".... In this case, if the store ID and the receipt ID recorded in the ID record area corresponding to an area are not coincident with those recorded in the ID record area corresponding to an area with a preceding number, the color of the stamp image is changed.

In this way, if the electronic stamp card image to which the stamp data is added, the processor 11 controls the communication interface 14 to transmit the data of the electronic stamp card image to the information terminal 5 that transmitted the stamp request command in Act 48. Under the control, the electronic stamp card image is displayed on the touch panel 55 of the information terminal 5 that transmitted the stamp request command.

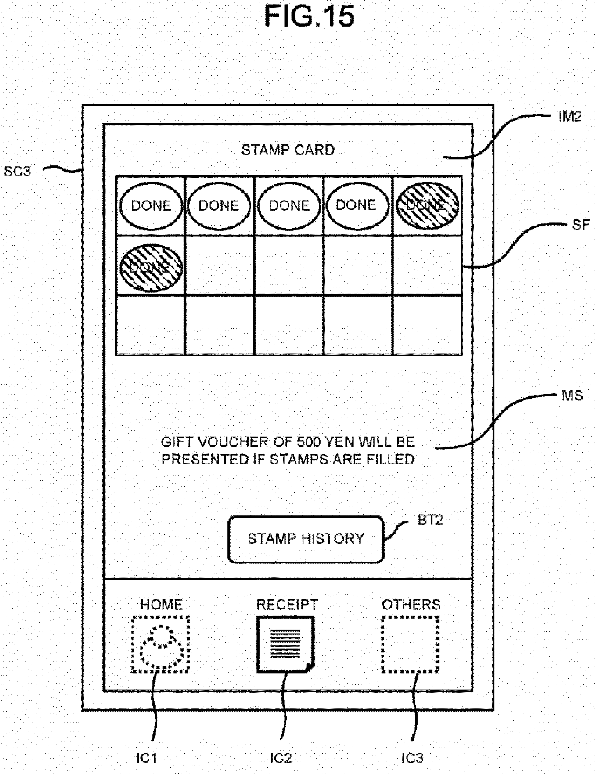

Fig. 15 shows an example of a screen SC3 including an electronic stamp card image IM2 displayed on the touch panel 55. On the screen SC3, in the stamp card having 15 stamp frames SF, an electronic stamp card image IM2 to which six stamps are attached is displayed. A frame number "1" is assigned to an upper left stamp frame SF, and a frame number "2" is assigned to an adjacent stamp frame SF on the right. In the stamp frames with the frame numbers "1" to "3", the stamps are displayed in the first color; in the stamp frames with the frame numbers "4" and "5", the stamps are displayed in the second color; and in a stamp frame with a frame number "6", a stamp is displayed in a third color. On the screen SC3, an image of a stamp history button BT2 as well as the electronic stamp card image IM2 is also displayed. A message MS indicating the privilege obtained when the number of collected stamps reaches the maximum number of stamps is also displayed. For convenience of description, it is assumed that the stamp is shown by displaying a character "done" in a circular frame. The presence of hatching in the frame or the direction of hatching indicates difference in the color.

The customer who confirms the electronic stamp card image IM2 can confirm a receipt which is a purchase record of a transaction for which any one of the stamps is issued. It is also possible to confirm a history of the stamp issued to the electronic stamp card. To confirm the receipt, the customer touches the stamp. To check the history, the customer touches the stamp history button BT2. If the stamp is touched, a stamp selection command is transmitted from the information terminal 5 to the center server 1. The stamp selection command includes a frame number of the stamp frame to which the touched stamp is attached. On the other hand, if the stamp history button BT2 is touched, a stamp history request command is transmitted from the information terminal 5 to the center server 1.

In Act 48, the processor 11 of the center server 1 that controls transmission of the stamp card image determines whether or not a stamp selection command is received in Act 49. If the stamp selection command is not received (No in Act 49), the processor 11 determines whether or not the stamp history request command is received in Act 50. If the stamp history request command is not received (No in Act 50), the processor 11 returns to the processing in Act 49. Here, the processor 11 stands by until the stamp selection command is received in Act 49 or the stamp history request command is received in Act 50.

In the standby state in Act 49 and Act 50, if the stamp history request command is received (Yes in Act 50), the processor 11 generates the stamp history image based on the data in the management record 63Rb in Act 51. Specifically, the processor 11 acquires the member ID from the management record 63Rb. The processor 11 acquires the store ID and the receipt ID recorded in the ID record area corresponding to the number area according to the order of the stamp number. Then, the processor 11 retrieves the receipt database 61 to extract a receipt record 61c including the member ID, the store ID and the receipt ID. Then, the processor 11 generates the stamp history image in which the transaction date and time, the store name identified by the store ID, and the number of stamps in the receipt record 61c are listed. The number of stamps is the number of consecutive ID record areas, in which the same store ID and receipt ID are recorded, according to the order of the stamp number.

In this way, after generating the stamp history image, the processor 11 controls the communication interface 14 to transmit the data of the stamp history image to the information terminal 5 that transmitted the history request command in Act 52. Under the control, the stamp history image is displayed on the touch panel 55 of the information terminal 5 which transmitted the history request command.

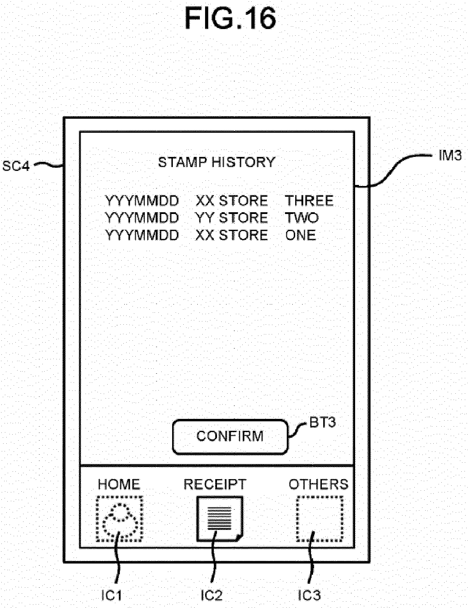

Fig. 16 shows an example of a screen SC4 including a stamp history image IM3 displayed on the touch panel 55. On the screen SC4, the stamp history image IM3 is displayed. The stamp history image IM3 includes three stamps given due to shopping in an XX store, two stamps given due to shopping in a YY store, and one stamp given due to another shopping in the XX store. On the screen SC4, an image of a confirmation button BT3 as well as the stamp history image IM3 is also displayed.

The customer who confirms the stamp history image IM3 touches the confirmation button BT3. If the confirmation button BT 3 is touched, a confirmation command is transmitted from the information terminal 5 to the center server 1.

In Act 53, the processor 11 of the center server 1 that controls transmission of the stamp history image in Act 52 stands by until a confirmation command is received. If the confirmation command is received from the information terminal 5 (Yes in Act 53), the processor 11 controls the communication interface 14 to transmit the stamp card image that has been transmitted in Act 48 to the information terminal 5 again in Act 54. Under the control, in the information terminal 5 on which the confirmation button BT3 is touched, the electronic stamp card image is displayed again on the touch panel 55.

In Act 54, the processor 11 of the center server 1 which controls transmission of the stamp card image again returns to the standby state in Act 49 and Act 50.

In the standby state in Act 49 and Act 50, if the stamp selection command is received (Yes in Act 49), the processor 11 extracts the member ID from the management record 63Rb in Act 55. The processor 11 extracts the store ID and the receipt ID recorded in the ID record area corresponding to a stamp number area with a frame number included in the stamp selection command in the management record 63Rb.

In Act 56, the processor 11 retrieves the receipt database 61 to acquire the receipt record 61Rb in which the member ID, the store ID and the receipt ID are coincident with those extracted in Act 55. Then, the processor 11 extracts the receipt data from the receipt record 61Rb. Furthermore, the processor 11 creates a receipt image in Act 57. Then, the processor 11 controls the communication interface 14 to transmit the data of the receipt image to the information terminal 5 that transmitted the stamp selection command in Act 58. Under the control, in the information terminal 5 that transmitted the stamp selection command, a receipt image when the selected stamp is issued is displayed on the touch panel 55.

In Act 58, the processor 11 of the center server 1 which controls the transmission of the receipt image returns to the standby state in Act 41 and Act 42.

In the standby state in Act 34 and Act 35, or in the standby state in Act 41 and Act 42, if the termination request command is received (Yes in Act 35 or Act 42), the processor 11 terminates the browsing processing. In the standby state in Act 49 and Act 50, the processor 11 may terminate the browsing processing if the termination request command is received.

The computer with the processor 11 as the central part functions as a control module by executing the processing in Act 34 to Act 58 by executing the linkage program.

As described above, according to at least one embodiment, the customer can browse the image IM1 of the electronic receipt using the information terminal 5, and can browse the image IM2 of the electronic stamp card associated with the electronic receipt. The electronic stamp card associated with the electronic receipt is an electronic stamp card that collects stamps given according to contents of the transaction in which the electronic receipt is issued. The customer can browse the image IM2 of the electronic stamp card simply by touching the stamped button BT1 displayed in the electronic receipt image IM1. Therefore, it is possible to efficiently link the electronic receipt system with the electronic stamp card system.

As described above, the stamped button BT1 is displayed in the image IM1 of the electronic receipt for the transaction in which the stamp is issued. Therefore, depending on whether the stamped button BT1 is displayed, the customer can easily identify whether it is the electronic receipt for the transaction in which the stamp is issued.

The image IM2 of the electronic stamp card is an image indicating a state in which stamps are individually affixed to the stamp frames SF of the stamp card. According to at least one embodiment, by touching any one of the stamps, an image of the electronic receipt in the transaction in which the stamp is issued is displayed on the touch panel 55 of the information terminal 5. Therefore, the customer can easily confirm the image IM1 of the receipt in the transaction in which the stamp is issued from the image IM2 of the electronic stamp card.

In addition, the images of the stamps displayed in the stamp frames SF are controlled so that a plurality of stamps issued in the same transaction is displayed in the same color, and the stamps issued in different transactions are displayed in different colors. Therefore, the customer can easily identify whether it is a stamp issued in the same transaction or a stamp issued in different transactions.

Modifications of the above embodiments are described below.

In the above embodiments, the center server 1 extracts the receipt ID and the transaction date and time from the receipt data. However, when generating the electronic receipt data ERD, the processor 21 of the POS terminal 2 may extract the receipt ID and the transaction date and time from the receipt data. Then, the processor 21 may generate the electronic receipt data ERD from the receipt ID, the transaction date and time, the member ID, the store ID and the receipt data, and transmit the generated electronic receipt data ERD to the center server 1.

In the above embodiments, a plurality of the retail stores shares a stamp card. However, a different stamp card may be used in each retail store. In that case, the number of object stores S can be omitted from the card record 62R.

In the above embodiments, the processor 11 of the center server 1 determines whether or not the transaction amount is equal to or larger than the unit amount in Act 8. However, whether the transaction amount is greater than the unit amount may be determined. In this case, if the transaction amount is larger than the unit amount, the processer 11 proceeds to the processing in Act 9, and if the transaction amount is equal to or less than the unit amount, the storage processing is terminated.

In the above embodiments, the period and amount of the transaction are used as the stamp issuing conditions. However, the issuing condition is not limited thereto. For example, whether a specific commodity is purchased may be used as the issuing condition.

In the above embodiments, the processor 21 of the POS terminal 2 determines that the electronic receipt processing is to be performed when the barcode BC of the home screen SC1 is read by the reading device 28. In another embodiment, it may be determined that the electronic receipt processing is to be performed if a card number such as a point card associated with the member ID indicated by the barcode BC is read by a card reader.

The access of the center server 1, which is a data processing apparatus, is generally performed in a state in which a program such as a linkage program is stored in the storage section such as the main memory 12 or the auxiliary storage device 13. However, the present invention is not limited thereto, and the access of the center server 1 may be performed in a state in which the linkage program is not stored in the storage section. In this case, the linkage program individually transferred from the center server 1 may be written in a writable storage device of the center server 1 in response to an operation by a user or the like. The transfer of the linkage program and the like can be performed by recording on a removable recording medium or by communication via a network. The recording medium may be in any form as long as it can store a program and is readable by the apparatus, such as a CD-ROM (Compact Disc Read-Only Memory), a memory card, etc. A function obtained by installing or downloading the program may be realized by the cooperation with an OS (operating system) or the like in the apparatus.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A data processing apparatus, comprising: at least one computer, the at least one computer configured to:
acquire customer specifying information for specifying a customer and receipt data indicating details of purchase by the customer;
add the customer specifying information and the receipt data acquired to a first storage section in which the customer specifying information and the receipt data are stored in an associated manner;
determine whether a condition for issuing a stamp for which a privilege can be obtained according to the number of collected stamps based on the receipt data acquired is satisfied, and issue a stamp when the issuing condition is satisfied;
update data of a stamp card, which is stored in association with the customer specifying information acquired, in a second storage section in which the customer specifying information and the data of the stamp card for collecting the stamp are stored in an associated manner, to data of the stamp card indicating a result of collecting the stamp issued when the issuing module issues the stamp;
associate card identification information for identifying the stamp card, of which the data is updated, with the receipt data acquired when the stamp is issued; and
perform control to cause to display, on an information terminal possessed by the customer, a receipt image based on the receipt data stored in the first storage section and an image of the stamp card identified by the card identification information associated with the receipt data.

2. The data processing apparatus according to claim 1, wherein
when an operation to request browsing of a stamp card is performed with the information terminal in a state in which the receipt image is displayed on the information terminal possessed by the customer, the at least one computer is configured to control to cause to display the image of the stamp card on the information terminal.

3. The data processing apparatus according to claim 1 or 2, wherein
when the card identification information is associated with the receipt data, the at least one computer is configured to control to cause to display the receipt image based on the receipt data as well as a notification image for notifying that it is a stamp issuing object.

4. The data processing apparatus according to any one of claims 1 to 3, wherein
the image of the stamp card is an image indicating a state in which stamps are individually affixed to the stamp card, and
when a stamp on the stamp card is selected in a state in which the image of the stamp card is displayed on the information terminal possessed by the customer, the at least one computer is configured to control to cause to display a receipt image based on the receipt data when the stamp is issued on the information terminal.

5. The data processing apparatus according to any one of claims 1 to 4, wherein when the number of stamps to be on the stamp card reaches a maximum amount, the at least one computer is configured to issue a new stamp card.

6. The data processing apparatus according to any one of claims 1 to 5, wherein when a stamp history request command is received from the information terminal possessed by the customer, the at least one computer is configured to cause to generate a stamp history image on a display of the information terminal possessed by the customer.

7. The data processing apparatus according to any one of claims 1 to 6, wherein the at least one computer is implemented as a server.

8. A method for performing the data processing, comprising:
acquiring customer specifying information for specifying a customer and receipt data indicating purchase information by the customer;
adding the acquired customer specifying information and the receipt data to a first storage section in which the customer specifying information and the receipt data are stored in an associated manner;
determining whether a condition for issuing a stamp for which a privilege can be obtained according to the number of collected stamps based on the acquired receipt data is satisfied, and issuing a stamp when the issuing condition is satisfied;
updating data of a stamp card, which is stored in association with the acquired customer specifying information in a second storage section in which the customer specifying information and the data of the stamp card for collecting the stamp are stored in an associated manner, to data of the stamp card indicating a result of collecting the issued stamp when the stamp is issued;
associating card identification information for identifying the stamp card, of which the data is updated with the acquired receipt data, when the stamp is issued; and
performing control to cause to display, on an information terminal possessed by the customer, a receipt image based on the receipt data stored in the first storage section and an image of the stamp card identified by the card identification information associated with the receipt data.

9. The method according to claim 8, wherein
when an operation to request browsing of a stamp card is performed with the information terminal in a state in which the receipt image is displayed on the information terminal possessed by the customer, the image of the stamp card is displayed on the information terminal.

10. The method according to claim 8 or 9, wherein
when the card identification information is associated with the receipt data, the receipt image based on the receipt data as well as a notification image for notifying that it is a stamp issuing object are displayed.

11. The method according to any one of claims 8 to 10, wherein
the image of the stamp card is an image indicating a state in which stamps are individually affixed to the stamp card, and
when a stamp on the stamp card is selected in a state in which the image of the stamp card is displayed on the information terminal possessed by the customer, a receipt image based on the receipt data when the stamp is issued on the information terminal is displayed.

12. The method according to any one of claims 8 to 11, wherein when the number of stamps to be on the stamp card reaches a maximum amount, a new stamp card is issued.

13. The method according to any one of claims 8 to 12, wherein when a stamp history request command is received from the information terminal possessed by the customer, a stamp history image is generated on a display of the information terminal possessed by the customer.

14. A non-transitory computer readable medium storing a program, which when executed by a computer, performs the steps of the method according to any one of claims 8 to 13.

15. A computer program product comprising program code means stored on a computer readable medium for performing the method according to any one of claims 8 to 13, when the program product is run on a computer.
